(19) Europäisches Patentamt
European Patent Office
Office européen des brevets

(11) **EP 1 419 083 B1**

(12) **EUROPÄISCHE PATENTSCHRIFT**

(45) Veröffentlichungstag und Bekanntmachung des Hinweises auf die Patenterteilung:
**11.10.2006 Patentblatt 2006/41**

(21) Anmeldenummer: **02762413.9**

(22) Anmeldetag: **30.07.2002**

(51) Int Cl.:
**B62D 6/04** (2006.01)

(86) Internationale Anmeldenummer:
**PCT/EP2002/008446**

(87) Internationale Veröffentlichungsnummer:
**WO 2003/018386 (06.03.2003 Gazette 2003/10)**

(54) **KRAFTFAHRZEUG-LENKSYSTEM MIT EINEM GIERRATENREGLER**

AUTOMOTIVE STEERING SYSTEM COMPRISING A YAW RATE CONTROLLER

SYSTEME DE DIRECTION DE VEHICULE AUTOMOBILE COMPORTANT UN REGULATEUR DU TAUX DE LACET

(84) Benannte Vertragsstaaten:
**DE FR GB IT SE**

(30) Priorität: **23.08.2001 DE 10141274**

(43) Veröffentlichungstag der Anmeldung:
**19.05.2004 Patentblatt 2004/21**

(73) Patentinhaber: **Bayerische Motoren Werke Aktiengesellschaft**
**80809 München (DE)**

(72) Erfinder: **BAUMGARTEN, Goetz**
**85757 Karlsfeld (DE)**

(56) Entgegenhaltungen:
**DE-A- 19 751 227**

- ACKERMANN J ET AL: "FAHRSICHERHEIT DURCH ROBUSTE LENKREGELUNG" AUTOMATISIERUNGSTECHNIK - AT, OLDENBOURG VERLAG. MUNCHEN, DE, Bd. 44, Nr. 5, 1. Mai 1996 (1996-05-01), Seiten 219-225, XP000583464 ISSN: 0178-2312

**EP 1 419 083 B1**

**Beschreibung**

Die Erfindung betrifft ein Kraftfahrzeug-Lenksystem mit einem Gierratenregler, der laufend eine die Fahrzeug-Gierbewegung repräsentierende Gierrate erfasst und ein hiervon abhängiges Steuersignal bildet, das eine einer unerwünschten Gierbewegung entgegenwirkende Lenkbewegung veranlasst. Zum technischen Umfeld wird beispielshalber auf die DE 197 51 227 A1 verwiesen.

In dieser genannten Schrift ist ein Verfahren sowie eine Vorrichtung zum Betrieb eines Lenksystems für ein Kraftfahrzeug beschrieben, das bzw. die einen aktiven Lenkeingriff zur Verbesserung des Gierverhaltens eines Fahrzeugs ermöglicht, wobei dieser aktive Lenkeingriff nur dann eingeschaltet wird, wenn eine äußere Störung der Fahrzeugbewegung detektiert wird. Als eine solche Störung ist in der genannten Schrift eine μ-Split-ABS-Bremsung genannt. Beim Bremsen auf μ-Split-Fahrbahnen kurvt nämlich ohne Zusatzmaßnahmen ein zweispuriges Fahrzeug auf die Seite der Hochreibwertseite ein. Grund dafür ist das entstehende Giermoment bei ABS-Eingriffen, da diese unterschiedliche Bremskräfte auf der linken bzw. rechten Fahrzeugseite verursachen.

Ebenfalls erwähnt ist in der genannten Schrift eine sog. Giermomenten-Kompensation, die diesen Effekt verhindern soll. Diese Giermomenten-Kompensation arbeitet mit den an den linken und rechten Fzg-Rädern unterschiedlichen Bremsdrücken, die gemessen werden und aus deren Differenz ein Stellkommando bspw. für den Stellmotor einer Überlagerungslenkung - und somit eine der unerwünschten Gierbewegung entgegenwirkende Lenkbewegung - berechnet und in Gang gesetzt wird. Bei dieser Giermomenten-Kompensation handelt es sich regelungstechnisch gesehen um eine Störgrößenaufschaltung.

Da bei einem Bremsvorgang während einer Kurvenfahrt des Fahrzeugs aufgrund der unterschiedlichen Aufstandskräfte am kurveninneren bzw. kurvenäußeren Rad ebenfalls links bzw. rechts unterschiedliche Bremsdrücke auftreten, wird auch bei Kurvenfahrt ein Stellkommando erzeugt, welches tendenziell das Fahrzeug zu stark nach "kurveninnen" lenkt, weshalb die Giermomenten-Kompensation für Kurvenfahrten mit größerer Querbeschleunigung weniger geeignet ist. Ferner bestehen weitere Einflüsse auf das sog. Störgiermoment, für die keine Sensoren im Fahrzeug zur Verfügung stehen, wie bspw. unterschiedliche Bremsscheibenreibwerte oder Bremsscheibentemperaturen auf der linken bzw. rechten Fahrzeugseite, sowie unterschiedliche Reifenfabrikate, der Reifen-Abnutzungszustand und anderes mehr.

Während eine Giermomenten-Kompensation versucht, die Ursache für die störende Gierbewegung des Fahrzeugs quantitativ zu bestimmen - nämlich das störende Giermoment, welches die Gierbeschleunigung beeinflusst und somit eine Gierrate aufbauen kann -, wird zur Vermeidung der soeben genannten Nachteile in der zitierten DE 197 51 227 A1 vorgeschlagen, direkt die unerwünschte Auswirkung selbst, nämlich die Gierrate, zu bestimmen und zu bekämpfen. Hierfür ist eine eigenständige Gierratenregelung vorgeschlagen, die erst in einer besonderen Fzg-Bremssituation, nämlich beim. Bremsen auf einer μ-Split-Fahrbahn, zugeschaltet wird. Die DE 197 51 227 A1 schlägt somit einen sog. Extra-Regler vor, der nur in den genannten besonderen Fällen aktiv wird.

Diesbezüglich ist eine Steigerung der Effizienz bzw. der Wirtschaftlichkeit und des Nutzens möglich, wenn entsprechend dem kennzeichnenden Teil des Anspruchs 1 das Steuersignal des Gierratenreglers generell im ungebremsten Fahrzeug-Fahrzustand anders gebildet wird, als wenn das Fahrzeug abgebremst wird (= Aufgabe und Lösung der vorliegenden Erfindung). Vorteilhafte Aus- und Weiterbildungen sind Inhalt der Unteransprüche.

Erfindungsgemäß ist ein einziger Gierratenregler im Fahrzeug vorhanden, der praktisch für alle Fahrzustände zuständig ist, der dabei jedoch eine vom Fahrzustand abhängige unterschiedliche Regelcharakteristik besitzt. Als Unterscheidungskriterium für die unterschiedlichen Fahrzustände gilt dabei die Abfrage, ob es sich um einen ungebremsten Fahrzustand handelt, oder ob das Fahrzeug abgebremst wird. Dabei soll die Gierratenregelung im Falle eines Abbremsens des Fahrzeugs schneller oder schärfer ansprechen als im ungebremsten Fahrzustand.

In diesem Zusammenhang ist zu erwähnen, dass prinzipbedingt eine Gierratenregelung nicht ganz so schnell wie eine Giermomenten-Kompensation ist, da letztere direkt die Gierbeschleunigung bekämpft, jedoch ist auch eine Kompensation durch die Gierratenregelung immer noch schnell genug, wenn ein Regeldifferenzzweig gebildet wird, der ein möglichst frühes Ansprechen bereits bei kleinen Regeldifferenzen ermöglicht, um bspw. ein schnelles Gegenlenken bei μ-Split-Bremsungen zu erreichen. Dies ist gewährleistet, wenn das Steuersignal, das aus der Regeldifferenz zwischen einem Gierraten-Sollwert und dem Gierraten-Istwert ermittelt wird, im Falle eines Bremsvorganges mit zumindest einem anderen und insbesondere einem größeren Verstärkungsfaktor gebildet wird, als im ungebremsten Fahrtzustand.

Ein bevorzugter stets laufender Gierratenregler kann z.B. einen sog. Gierratensollwert ($r_{soll}$) bestimmen und unter Berücksichtigung einer aktuell gemessenen Gierrate (r) die Regeldifferenz ($r_{diff}$) wie folgt berechnen:

$$(r_{diff}) = (r_{soll}) - (r)$$

Diese Regeldifferenz wird zu einem Steuersignal ($\Delta_{soll}$), das eine entsprechende Lenkbewegung veranlasst, verarbeitet, und zwar in einem sog. Regeldifferenzzweig, der im im einfachsten Fall aus einer "Skalierung" bzw. proportionalen Verstärkung ($k_P$) von ($r_{diff}$) besteht, also :

$$(\Delta_{soll}) = (k_P) \bullet (r_{diff})$$

Bei diesem sog. Proportionalanteil des Regeldifferenzzweigs ist der Wert des Verstärkungsfaktors ($k_P$) im ungebremsten Fahrzustand geringer, als wenn das Fahrzeug abgebremst wird.

Der Regeldifferenzzweig kann derart erweitert werden, dass ein möglichst genaues stationäres Gegenlenken insbesondere bei μ-Split-Bremsungen ermöglicht wird, so dass der Fahrer praktisch während des gesamten Bremsvorgangs nicht gegenlenken muss. Dies ist durch Einbau eines Integralgliedes im Regeldifferenzzweig realisierbar. Bevorzugt ist dabei im Regeldifferenzzweig neben dem Proportionalanteil ein Integralanteil vorgesehen, dessen Verstärkungsfaktor ($k_I$) im Falle eines Bremsvorganges einen anderen Wert besitzt als im ungebremsten Fahrzustand. In Weiterbildung des obigen Beispiels wird dann das Steuersignal ($\Delta_{soll}$) wie folgt gebildet:

$$(\Delta_{soll}) = (k_P) \bullet (r_{diff}) + (k_I) \bullet \int (r_{diff}(t))dt$$

Im Sinne einer vorteilhaften Weiterbildung kann zusätzlich im Falle eines Bremsvorganges ein Filter im Regeldifferenzzweig gegenüber dem ungebremsten Fahrzustand abgeändert oder aktiviert werden. Möglich sind hier Vorhaltfilter, Rauschunterdrückungsfilter oder eine sog. Totzone. Dabei können derartige abgeänderte Filter oder dgl. neben dem Regeldifferenzzweig oder alternativ hierzu auch im Rückführzweig des entsprechenden Signals vorgesehen sein, was gleichermaßen für den geänderten Verstärkungsfaktor oder dgl. zutrifft.

Im übrigen sei darauf hingewiesen, dass eine entsprechende abgeänderte Bildung des Steuersignals nicht nur zwischen einem gebremsten und einem ungebremsten Fahrzustand unterschiedlich sein kann, sondern dass auch im Falle eines Regeleingriffs eines Bremsregelsystems das Steuersignal anders gebildet werden kann, als wenn das Fahrzeug ohne einen solchen Regeleingriff (insbesondere eines ABS) abgebremst wird.

Zur Erkennung, ob das Fahrzeug abgebremst wird oder ob ein ungebremster Fahrzustand vorliegt kann die bereits im Fahrzeug vorliegende Information genutzt werden. So kann ein Bremsvorgang bspw. aus der Aktivierung eines Fahrzeug-Bremslichtschalters und/oder aus einer Druckänderung im hydraulischen Fahrzeug-Bremssystem erkannt werden, aber auch Flags in der ABS-Regelung können entsprechende Informationen liefern, um damit situationsabhängig bei Bremsvorgängen bzw. ABS-Eingriffen den Regeldifferenzzweig wie beschrieben besonders anzupassen.

Insofern ist die vorliegende Erfindung günstiger als der aus der eingangs genannten DE 197 51 227 A1 bekante Stand der Technik, nachdem dort auf die Erkennung des speziellen μ-Split-Bremszustandes abgestellt wird und somit zumindest zwei Bremsdrucksensoren (nämlich vorne links und vorne rechts) benötigt werden. Die vorliegende Erfindung hingegen legt mehr Betonung auf die Erkennung eines allgemeinen Bremszustands, und zwar unabhängig davon, ob μ-Split vorliegt oder nicht. Besondere Bremsdrucksensoren sind daher nicht erforderlich. Erfindungsgemäß wird nämlich der Regeldifferenzzweig immer in gleicher Weise beim Bremsen geändert, unabhängig davon ob μ-Split vorliegt oder nicht. Allenfalls wird zwischen einer Bremsung mit oder ohne Eingriff eines Bremsdruck-Regelsystems unterschieden, zur Erkennung dessen aber keine Bremsdrucksensoren erforderlich sind.

Wichtig ist insbesondere, dass für den Fahrer des Fahrzeugs ein überraschendes Ausbrechen des Fahrzeugs im ersten Moment des Bremsens vermieden wird, also im Zeitraum der sog. "Schrecksekunde". Danach, wenn der Bremsvorgang stationär weiterläuft, ist der Fahrer zumeist in der Lage, mit dem Lenkrad das dann stationäre Giermoment, das bspw. durch μ-Split-Verhältnisse hervorgerufen wird, mit einem stationären Lenkradwinkel zu kompensieren. Aus diesem Grund wird bei der vorliegenden Erfindung mehr Wert auf den Proportionalanteil im Regeldifferenzzweig gelegt, während bspw. in der genannten DE 197 51 227 A1 mehr Betonung auf den Integralanteil gelegt ist.

Im übrigen wird mit der vorliegenden Erfindung generell eine Kompensation der Gierneigung bei Bremsvorgängen in Kurvenfahrten ermöglicht. Ferner können keine ungünstigen Wechselwirkungen mit Fzg-Stabilisierungseinrichtungen auftreten, die in das Fzg-Bremssystem eingreifen, da die durch derartige Stabilisierungseinrichtungen hervorgerufenenen Bremsdruckunterschiede bei der vorliegenden Erfindung nicht zu einem Lenkeingriff führen.

**Patentansprüche**

1. Kraftfahrzeug-Lenksystem mit einem Gierratenregler, der laufend eine die Fahrzeug-Gierbewegung repräsentierende Gierrate erfasst und ein hiervon abhängiges Steuersignal bildet, das eine einer unerwünschten Gierbewegung entgegenwirkende Lenkbewegung veranlasst, **dadurch gekennzeichnet, daß** dieses Steuersignal im ungebremsten Fahrzustand anders gebildet wird, als wenn das Fahrzeug abgebremst wird.

2. Kraftfahrzeug-Lenksystem nach Anspruch 1,
**dadurch gekennzeichnet, dass** das Steuersignal im Falle eines Regeleingriffs eines Bremsregelsystems anders gebildet wird, als wenn das Fahrzeug ohne einen solchen Regeleingriff abgebremst wird.

3. Kraftfahrzeug-Lenksystem nach Anspruch 1 oder 2,
**dadurch gekennzeichnet, dass** das Steuersignal, das aus der Regeldifferenz zwischen einem Gierraten-Sollwert und dem Gierraten-Istwert ermittelt wird, im Falle eines ggf. geregelten Bremsvorganges mit zumindest einem anderen Verstärkungsfaktor ($k_P$) gebildet wird, als im ungebremsten Fahrtzustand.

4. Kraftfahrzeug-Lenksystem nach Anspruch 3,
**dadurch gekennzeichnet, dass** insbesondere im Regeldifferenzzweig neben dem Proportionalanteil ein Integralanteil vorgesehen ist, dessen Verstärkungsfaktor ($k_I$) im Falle eines Bremsvorganges einen anderen Wert besitzt als im ungebremsten Fahrzustand.

5. Kraftfahrzeug-Lenksystem nach einem der vorangegangenen Ansprüche,
**dadurch gekennzeichnet, dass** im Falle eines Bremsvorganges ein Filter im Regeldifferenzzweig oder im Rückführzweig gegenüber dem ungebremsten Fahrzustand abgeändert oder aktiviert wird.

6. Kraftfahrzeug-Lenksystem nach einem der vorangegangenen Ansprüche,
**dadurch gekennzeichnet, dass** ein Bremsvorgang aus der Aktivierung eines Fahrzeug-Bremslichtschalters und/ oder aus einer Druckänderung im hydraulischen Fahrzeug-Bremssystem erkannt wird.

## Claims

1. A vehicle steering system comprising a yawing-rate controller which continuously detects a yawing rate representing the yawing motion of the vehicle and in dependence thereon forms a control signal which results in a steering motion counteracting the undesired yawing motion, **characterised in that** the control signal when the vehicle is not braked is formed in a different way from when the vehicle is braked.

2. A steering system according to claim 1, **characterised in that** after intervention in a brake control system the control signal is formed differently from when the vehicle is braked without such intervention.

3. A steering system according to claim 1 or claim 2, **characterised in that** the control signal obtained from the difference between the set and the actual yawing rate is formed with at least one different amplification factor ($k_P$) after controlled braking and another in the absence of braking.

4. A steering system according to claim 3, **characterised in that** at least in the control difference branch, the proportional part is accompanied by an integral part having an amplification factor ($k_I$) which has a different value after braking from that in the absence of braking.

5. A steering system according to any of the preceding claims, **characterised in that** if the brakes are applied, a filter in the control difference branch or in the return branch is activated or altered from its state in the absence of braking.

6. A steering system according to any of the preceding claims, **characterised in that** a braking operation is indicated by activation of a vehicle brake light switch and/or by a pressure change in the hydraulic vehicle brake system.

## Revendications

1. Système de direction de véhicule automobile comportant un régulateur du vitesse de lacet qui enregistre en continu un vitesse de lacet représentant le mouvement de lacet du véhicule et forme un signal de commande en fonction de celui-ci, ce signal entraînant un mouvement de direction contraire au mouvement de lacet non voulu,
**caractérisé en ce que**
la forme de ce signal de commande est différente selon que le mouvement du véhicule implique un freinage ou non.

**2.** Système de direction de véhicule automobile selon la revendication 1,
**caractérisé en ce que**
le signal de commande a une forme différente dans le cas d'une intervention de régulation d'un système de régulation de freinage par rapport à un véhicule qui freine sans utiliser une telle intervention de régulation.

**3.** Système de direction de véhicule automobile selon la revendication 1 ou 2,
**caractérisé en ce que**
le signal de commande, déterminé à partir de la différence de régulation entre une valeur de consigne du vitesse de lace et la valeur réelle du taux de lacet, est formé, dans le cas d'un processus de freinage éventuellement régulé, avec au moins un autre coefficient de renforcement ($K_p$) par rapport à un mouvement n'impliquant pas de freinage.

**4.** Système de direction de véhicule automobile selon la revendication 3,
**caractérisé en ce que**
dans la branche différentielle de régulation notamment, outre la composante proportionnelle, on prévoit une composante intégrale dont le coefficient de renforcement ($K_i$) présente une autre valeur dans le cas d'un processus de freinage par rapport à un mouvement n'impliquant pas de freinage.

**5.** Système de direction de véhicule automobile selon l'une quelconque des revendications précédentes,
**caractérisé en ce que**
dans le cas d'un processus de freinage, un filtre dans le circuit différentiel de régulation ou dans le circuit de retour est modifié ou activé par rapport au mouvement n'impliquant pas de freinage.

**6.** Système de direction de véhicule automobile selon l'une quelconque des revendications précédentes,
**caractérisé en ce qu'**
on détecte un processus de freinage à partir de l'activation d'un contacteur de feux de stop du véhicule et/ou à partir d'une modification de pression dans le système de freinage hydraulique du véhicule.